Europäisches Patentamt

(19) European Patent Office    (11) Publication number: **0 062 988**
Office européen des brevets    **B1**

(12)    **EUROPEAN PATENT SPECIFICATION**

(45) Date of publication of patent specification: **20.03.85**    (51) Int. Cl.⁴: **D 21 B 1/30, D 21 B 1/32**

(21) Application number: **82301567.2**

(22) Date of filing: **24.03.82**

(54) **Paper pulper.**

(30) Priority: **26.03.81 GB 8109466**

(43) Date of publication of application:
**20.10.82 Bulletin 82/42**

(45) Publication of the grant of the patent:
**20.03.85 Bulletin 85/12**

(84) Designated Contracting States:
**AT BE CH DE FR GB IT LI LU NL SE**

(56) References cited:
**FR-A- 999 864**
**FR-A-2 322 660**
**FR-A-2 376 703**
**US-A-1 709 133**
**US-A-2 674 162**

(73) Proprietor: **BELOIT CORPORATION**
**Beloit Wisconsin 53511 (US)**

(72) Inventor: **Peel, John Derek**
**Holly Bank Ward Lane**
**Disley Stockport Cheshire (GB)**

(74) Representative: **Ranson, Arthur Terence et al**
**W.P. Thompson & Co. Coopers Building Church**
**Street**
**Liverpool L1 3AB (GB)**

Courier Press, Leamington Spa, England.

## Description

The present invention relates to a paper pulper, particularly for the treatment of waste paper to produce useable stock or "slush pulp" therefrom.

A paper pulper known from FR—A—999864 comprises a drivable rotatable drum containing a freely rotatable roller of lesser axial length eccentrically located therein, wherein paper is fed through the nip between the drum and the roller. The internal surface of the drum may be ribbed and the roller is constituted by blades. The drum is filled when in an upright position from a closable end and emptied in a similar manner when the treatment of the pulp has proceeded for the required period.

It is an object of the present invention to provide a paper pulper requiring less energy and being more effective in breaking up or separating out any synthetic plastics materials, foils or other extraneous matter that may be contained in the feedstock, than pulpers hitherto provided. The pulper of the invention is designed to receive waste paper from opened bales from which heavy and large contaminants have been removed, and to maintain the size of contaminants to facilitate their removal.

According to the present invention, a paper pulper comprising a drivable rotatable drum containing an independently rotatable roller of lesser axial length eccentrically located therein, wherein paper to be pulped is fed through the nip between the drum and the roller, and the internal surface of the drum, over at least the axial extent corresponding to the roller and the external surface of the roller being provided with co-operating disintegrating faces characterised in that the drum is orientated with its longitudinal axis lying in an inclined plane, and a further axial extent of the internal surface of the drum downwardly of the respective co-operating disintegrating faces is provided with a plurality of circumferentially spaced holes constituting outlets for comminuted material.

The term "roller" as used in this specification is intended to comprehend within its scope a hollow body, i.e. a drum.

The shearing action tears and disintegrates the paper and the disintegrated bits form a pulp with added water and consequently may be washed out of the drum as pulp by spraying water into the drum. The paper feed-stock may be moistened before or after introduction into the drum, and it is preferably maintained in a moist condition after input into the drum to assist in disintegration of the paper. Accordingly, the pulper may be provided with means for spraying water thereinto preferably arranged so that the addition of water can be controlled at two or more locations in the length of the pulper. The means may introduce the water at either or both ends of the pulper, and may be arranged to operate either intermittently or continuously.

To facilitate throughput and drainage, the drum is arranged to incline downwardly from the input end, i.e. the end at which the paper feedstock is introduced. The extention of the drum in an axial direction beyond the end of the roller remote from said input end and the provision of a series of circumferentially spaced holes in the extended portion of the drum permit the pulp to drain from the drum. The holes may be dimensioned to prevent passage therethrough of extraneous material such as pieces of plastics material. Since the input used will usually be waste paper, the paper fed into the pulper may easily contain such extraneous material unless such material is first removed. The holes may be in the form of slots.

The downstream end of the drum may be open so that any extraneous material present passes out thereat.

It is also preferred that the roller itself be in the form of a drum closed at each end and that it provide means for introducing liquid into the drum and removing it therefrom so that the weight of the roller may be varied.

The present invention will now be further described, by way of example only, with reference to the accompanying schematic drawing, in which:

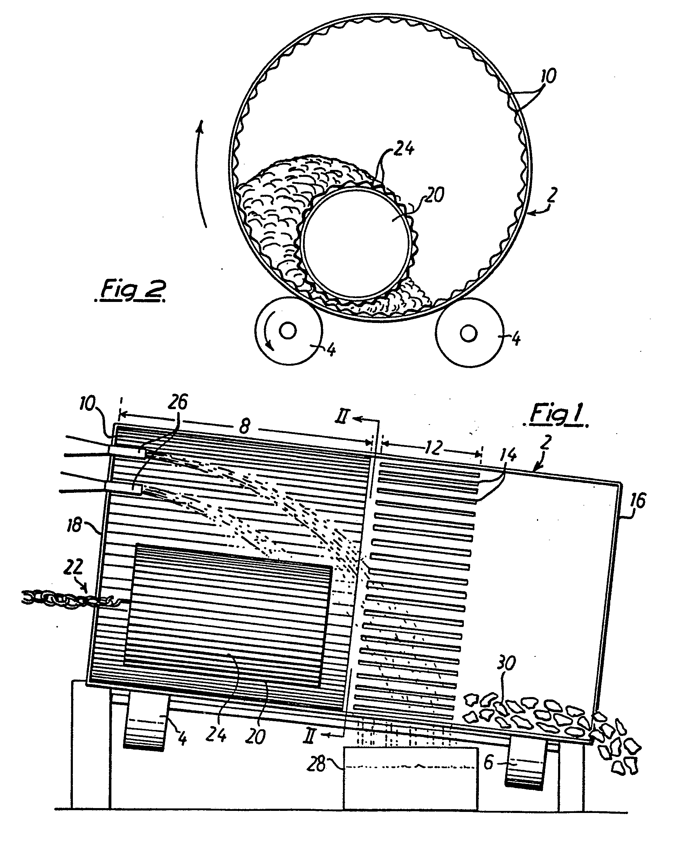

Figure 1 is a longitudinal vertical cross-sectional view of a paper pulper according to the present invention, and

Figure 2 is a transverse cross-sectional view of the pulper of Figure 1, taken along the line II—II of that Figure.

Referring to the drawing, the pulper comprises a rotatable drum 2, orientated to lie, with its longitudinal axis inclined, on a pair of rollers 4 adjacent the uppermost end of the drum and a pair of rollers 6, adjacent the lowermost end of the drum. At least one of the rollers in each pair is driven, and by means of a friction drive the drum 2 is thereby rotated.

On its interior surface, the drum, over a section 8 of its length extending from its uppermost end, is formed with a serrated surface 10 and this is followed by a further section 12 of its length comprising stock outlet holes in the form of slots 14 spaced around the circumference and extending through the shell of the drum. The section 12 comprising the slots terminates well short of the lowermost end 16 of the drum, which is formed with that end open.

The uppermost end 18 of the drum may have an end wall (not shown) in which case it is apertured to give access to the drum interior.

Located eccentrically within drum 2 is a roller 20 which is preferably also in the form a drum, the axial length of which is somewhat less than that of section 8 of the drum. Roller 20, when no feedstock is present in drum 2, is supported on the serrated interior surface 10 of section 8 of the drum. In order to maintain the axial position of roller 20 within drum 2, the former is tethered in any suitable manner, such as by a chain and swivel mechanism 22, to some fixed point.

The exterior surface of the roller is formed with serrations 24 in a like manner to that of the interior surface of section 8 of the drum 2.

In use of the pulper, paper feedstock is fed into the uppermost end 18 of the drum, while the latter is rotated by the friction drive provided by the driven ones of rollers 4, 6. This causes the roller 20 to roll on the drum interior and to draw feedstock into the nip formed between the serrations 24 of the roller 20 and those 10 of the drum 2 interior; the stock being sheared as it passes through the nip. The inclination of the pulper causes the paper feedstock to be fed forward under the action of gravity, the feedstock being repeatedly passed through the nip. This causes the stock to be comminuted and to disintegrate. Compression of the feedstock at the output side of the nip takes place on rotation of the drum and roller and this also gives rise to some amount of abrasion and disintegration of the stock.

The disintegrated stock or "slush pulp" is formed into a pulp by water sprayed into the drum by sprays 26 leading into the drum 2 through the apertured upper end 18 or introduced at any other convenient point. The watered and comminuted pulp then flows into drum section 12 to exit through the slots 14 therein into any suitable receptacle 28. The slots 14 are dimensioned to prevent exit of pieces of non-disintegrated material 30 resulting from the inclusion in the feedstock of extraneous material such as pieces of synthetic plastics material, metal foil, wet strengthened paper or other impurities, from passing through, and such material is carried on to exit at the open bottom end 16 of the drum 2. Alternatively, the feedstock may be cleansed of such material before input to the pulper. A doctor (not shown) may be used to clear the slots 14 of any pieces of extraneous material 30 that become lodged therein.

Preferably, the feedstock is moistened to a 6 to 35% consistency for treatment in the pulper. This may be done in the pulper, but the feedstock may also be wetted, at least with part of the water required, before introduction into the pulper.

Treatment agents may be added to the water, such as a bleach or ink dispersing agent.

Although the illustrated pulper employs serrated surfaces to effect the shearing action, other formations such as a scroll or indentations may be used, and it may be preferable for different configurations to be used on the drum 2 and roller 20 respectively.

The illustrated embodiment also shows the roller 20 as one which is freely rotated by rolling on the interior of the drum, but it may, in the alternative, be positively driven or be braked so that its rotational speed is not determined, or wholly determined, by the speed of rotation of the drum 2.

Further, two or more rollers 20 tethered together in series may be employed; and it is preferred in the case wherein the or each roller 20 is constituted by a drum, that the or each drum is capable of having liquid introduced into or removed from it so that the weight of the roller(s) 20 may be varied to suit different operating requirements. In this way, the pressures applied to the wetted paper by the rolling surfaces can be adjusted by varying the inner roll (20) mass.

Conveniently the angle of inclination of drum 2 can be varied as can its speed of rotation. In this way the time of treatment of stock passing therethrough can be adjusted to suit requirements dictated by the nature of the feedstock and the required quality of the disintegrated stock or "slush pulp".

## Claims

1. A paper pulper comprising a drivable rotatable drum (2) containing an independently rotatable roller (20) of lesser axial length eccentrically located therein, wherein paper to be pulped is fed through the nip between the drum and the roller, and the internal surface of the drum, over at least the axial extent (8) corresponding to the roller (20) and the external surface of the roller being provided with co-operating disintegrating faces (10, 24), characterised in that the drum is orientated with its longitudinal axis lying in an inclined plane, and a further axial extent of the internal surface of the drum downwardly of the respective co-operating disintegrating faces (10, 24) is provided with a plurality of circumferentially-spaced holes constituting outlets for comminuted material.

2. A paper pulper as claimed in claim 1, characterised in that the holes are in the form of slots (14).

3. A paper pulper as claimed in claim 1 or 2, characterised in that the upper end (18) of drum (2) is constituted as an inlet for paper feedstock.

4. A paper pulper as claimed in claim 1, 2 or 3, characterised in that the abrading discontinuities (10, 24) are in the form of serrations.

5. A paper pulper as claimed in any one of claims 1 to 4, characterised in that the downstream end (16) of the drum (2) is open for the discharge of extraneous material which has not been abraded between the co-operating surfaces of the drum and roller.

6. A paper pulper as claimed in any one of claims 1 to 5, characterised in that the roller (20) is in the form of a drum closed at each end and comprising means for introducing and removing a liquid therefrom to vary the weight of the roller.

## Patentansprüche

1. Papierpulper mit einer antreibbaren, in Drehung versetzbaren Trommel (2), die eine unabhängig drehbare Rolle (20) geringer axialer Länge enthält, die exzentrisch in der Trommel angeordnet ist, wobei zu zermahlendes Papier durch den Spalt zwischen der Trommel und der Rolle hindurchgeführt wird und die Innenfläche der Trommel, zumindest über den Axialbereich (8), der mit der Rolle (20) korrespondiert, und die Außenfläche der Rolle mit miteinander zusammenwirkenden Aufschlußflächen (10, 24) versehen sind, dadurch gekennzeichnet, daß die Längsachse der Trommel in einer geneigten Ebene liegt, und ein weiterer bezüglich den miteinander zusammenwirkenden Aufschlußflächen (10, 24) abwärts gelegener Axialbereich der Innenfläche der Trommel mit einer Vielzahl von in Umfangsrichtung beabstandeten Öffnungen versehen ist, die Auslässe für zerkleinertes Material bilden.

2. Papierpulper nach Anspruch 1 oder 2, dadurch gekennzeichnet, daß die Öffnungen in Form von Schlitzen (14) vorliegen.

3. Papierpulper nach Anspruch 1 oder 2, dadurch gekennzeichnet, daß das obere Ende (18) der Trommel (2) als Einlaß für zuzuführendes Papiermaterial ausgebildet ist.

4. Papierpulper nach Anspruch 1, 2 oder 3, dadurch gekennzeichnet, daß die abschleifenden Diskontinuitäten (10, 24) in Form von Kerben vorliegen.

5. Papierpulper nach einem der Ansprüche 1 bis 4, dadurch gekennzeichnet, daß das stromabwärts gelegene Ende (16) dsr Trommel (2) für die Abfuhr von Fremdmaterial offen ist, welches zwischen den zusammenwirkenden Flächen von Trommel und Rolle nicht abgeschliffen wurde.

6. Papierpulper nach einem der Ansprüche 1 bis 5, dadurch gekennzeichnet, daß die Rolle (20) in Form einer an jedem Ende geschlossennen Trommel vorliegt und Einrichtungen zur Zufuhr und Abfuhr einer Flüssigkeit aus dieser Rolle aufweist, um das Rollengewicht zu ändern.

## Revendications

1. Pulper à papier comprenant un tambour (2) rotatif pouvant être entraîné et contenant un rouleau (20) pouvant être entraîné en rotation de manière indépendante, de longueur axiale inférieure et disposé de manière excentrée à l'intérieur du tambour (2), le papier à défibrer étant introduit à travers l'étranglement entre le tambour et le rouleau et la surface intérieur du tambour, sur au moins l'étendue axiale (8) correspondant au rouleau (20) et la surface extérieure du rouleau étant pourvue de faces de désintrégration coopérant (10, 24), caractérisé en ce que le tambour est orienté avec son axe longitudinal reposant dans un plan incliné et en ce qu'une autre extension axiale de la surface interne de tambour est pourvue, vers le bas des faces respectives de désintégration coopérant (10, 24), d'une pluralité de trous espacés de manière circonférentielle et constituant des sorties pour la matière pulvérisée.

2. Pulper à papier selon la revendication 1, caractérisé en ce que les trous sont sous la forme de rainures (14).

3. Pulper à papier selon l'une des revendications 1 ou 2, caractérisé en ce que l'extrémité supérieure (18) du tambour (2) est constituée sous forme d'une entrée pour la matière d'alimentation en papier.

4. Pulper à papier selon l'une quelconque des revendications 1 à 3, caractérisé en ce que les discontinuités d'abrasion (10, 24) sont sous la forme de dentelures.

5. Pulper à papier selon l'une quelconque des revendications 1 à 4, caractérisé en ce que l'extrémité aval (16) du tambour (2) est ouverte pour l'éjection de matériaux étrangers qui n'ont pas été abrasés entre les surfaces coopérant du tambour et du rouleau.

6. Pulper à papier selon l'une quelconque des revendications 1 à 5, caractérisé en ce que le rouleau (20) est sous la forme d'un tambour fermé à chaque extrémité et comprenant des moyens pour introduire et enlever un liquide dudit tambour afin de faire varier le poids du rouleau.

Fig 2

Fig 1